# EUROPÄISCHE PATENTANMELDUNG

(11) **EP 3 525 333 A1**
(43) Veröffentlichungstag der Anmeldung: **14.08.2019**
(21) Anmeldenummer: 18155469.2
(22) Anmeldetag: 07.02.2018
(51) Int. Cl.: H02M 3/335

(54) **BIDIREKTIONALE SPERRWANDLERSCHALTUNG**

(71) Anmelder: Siemens Aktiengesellschaft, 80333 München (DE)
(72) Erfinder: Portisch, Daniel, 2170 Kleinhadersdorf (AT)
(74) Vertreter: Maier, Daniel Oliver

(57) **Zusammenfassung**

Die Erfindung betrifft eine bidirektionale Sperrwandlerschaltung, welche einen Transformator mit induktiv gekoppelter Primär- und Sekundärwicklung (W1, W2) sowie ein primärseitiges Schaltelement (SE1) und ein sekundärseitiges Schaltelement (SE2) umfasst. Dabei sind die Primärwicklung (W1) mit einem Spannungseingang der Sperrwandlerschaltung und die Sekundärwicklung (W2) mit einem Spannungsausgang der Sperrwandlerschaltung verbunden. Das primärseitige Schaltelement (SE1) ist in Reihe mit der Primärwicklung (W1) angeordnet. Das sekundärseitige Schaltelement (SE2) ist in Reihe mit der Sekundärwicklung (W2) angeordnet. Weiterhin weist die Sperrwandlerschaltung einen Ladekondensator (C3) auf, welche mittels eines ersten Anschlusses (A1) mit einem gemeinsamen Potential (M) von Primär- und Sekundärseite verbunden ist. Mittels eines zweiten Anschlusses ist der Ladekondensator (C3) über eine erste Diode (D1) mit einem gemeinsamen Potential von primärseitigem Schaltelement (SE1) und Primärwicklung (W1) und über eine zweite Diode (D2) mit einem gemeinsamen Potential von sekundärseitigem Schaltelement (SE2) und Sekundärwicklung (W2) verbunden. Weiterhin ist eingangs- oder ausgangsseitig ein Tiefsetzsteller (TS) angeordnet, durch welchen eine am Ladekondensator (C3) anliegende Spannung (U3) auf einen vorgebbaren Wert regelbar ist.

## Beschreibung

### Technisches Gebiet

Die gegenständliche Erfindung betrifft allgemein das Gebiet der Elektrotechnik, insbesondere den Bereich der Leistungselektronik sowie leistungselektronischer Schaltungen. Im Speziellen bezieht sich die vorliegende Erfindung auf eine bidirektionale Sperrwandlerschaltung, welche einen Transformator mit induktiv gekoppelter Primär- und Sekundärwicklung sowie ein primärseitiges Schaltelement sowie ein sekundärseitiges Schaltelement umfasst. Dabei ist die Primärwicklung mit einem Spannungseingang der Sperrwandlerschaltung verbunden und das primärseitige Schaltelement ist in Reihe mit der Primärwicklung angeordnet. Die Sekundärwicklung ist mit einem Spannungsausgang der Sperrwandlerschaltung verbunden und das sekundärseitige Schaltelement in Reihe mit der Sekundärwicklung angeordnet.

### Stand der Technik

Ein so genannter Sperrwandler, welcher auch Flyback-Konverter bezeichnet wird, stellt eine Variante eines Schaltnetzteils dar, mit welchem elektrische Lasten an ein Stromnetz oder an eine Stromquelle anschließbar sind. Insbesondere dient ein Sperrwandler zur Übertragung elektrischer Energie zwischen einem Spannungseingang bzw. einer Primärseite und einem Spannungsausgang bzw. einer Sekundärseite von meist galvanisch getrennter Gleichspannungen. Dazu wird während einer Flussphase durch einen durch die Primärwicklung eines Transformators fließenden Strom magnetische Energie gespeichert, welche während einer Sperrphase gegebenenfalls nach Gleichrichtung und Glättung an eine sekundärseitig angeschlossene Last abgegeben wird. Für ein Umschalten von der Flussphase auf die Sperrphase bzw. von der Sperrphase auf die Flussphase wird ein Schaltelement, welche in Reihe mit der Primärwicklung des Transformators angeordnet ist, von einer Steuereinrichtung z.B. lastabhängig geschaltet.

Eine spezielle Ausprägungsform eines Sperrwandlers stellt ein so genannter bidirektionaler Sperrwandler bzw. eine so genannte bidirektionale Sperrwandlerschaltung dar - wie z.B. aus den Schriften WO 2003/003552 A2 und WO 2004/030193 A1 bekannt. Bei dieser ist die sekundärseitige Diode des Sperrwandlers üblicherweise durch ein sekundärseitiges Schaltelement ersetzt, welches in Reihe mit der Sekundärwicklung des Transformators angeordnet ist. Auf diese Weise besteht die Sekundärseite aus einer spiegelverkehrten Anordnung der Primärseite im Bezug auf den Transformator.

Durch ein Schalten eines der beiden Schaltelemente (primär- oder sekundärseitig) wird eine Richtung des Energieflusses festgelegt, wobei die Funktionalität der Funktionalität eines Sperrwandlers entspricht. D.h. wird das primärseitige Schaltelement geschaltet, so wird Energie vom Spannungseingang bzw. der Eingangsseite der bidirektionalen Sperrwandlerschaltung zum Spannungsausgang bzw. zur Ausgangsseite der bidirektionalen Sperrwandlerschaltung übertragen. Das sekundärseitige Schaltelement arbeitet im diesem Fall als Diode. Wird das sekundärseitige Schaltelement geschaltet, so dreht sich der Energiefluss um - d.h. vom Spannungsausgang zum Spannungseingang - und das primärseitige Schaltelement arbeitet als Diode.

Bei Sperrwandlern wie bidirektionalen Sperrwandlern treten allerdings während eines Abschaltvorgangs des Energie einbringenden Schaltelements relativ hohe Spannungsbelastungen am jeweils gerade abschaltenden Schaltelement auf. D.h. wird ein Schaltelement ausgeschaltet, so kommt es durch eine Abmagnetisierung von Streuinduktivitäten des Transformators an diesem Schaltelement zu Überspannungen bzw. Spannungsspitzen. Diese Überspannungen bzw. Spannungsspitzen können die Funktionsfähigkeit des jeweils gerade abschaltenden Schaltelements einschränken bzw. zu Schäden am Schaltelement und der Sperrwandlerschaltung führen.

Um entsprechende Schäden durch Überspannungen und Spannungsspitzen beim Abschalten am jeweiligen Schaltelement und/oder an der Sperrwandlerschaltung zu verhindern, können beispielsweise Metall-Oxid-Halbleiter-Feldeffekttransistoren bzw. MOSFETs als Schaltelemente eingesetzt werden, welche eine deutlich höhere Sperrspannung bzw. eine so hohe Spannungsfestigkeit aufweisen, dass die entstehende Überspannung keine Gefährdung darstellt. Allerdings weisen diese MOSFETs auch einen höheren Durchlasswiderstand auf und damit höhere Verluste. Neben höheren Kosten und einem schlechten Wirkungsgrad aufgrund von Energieverlusten (z.B. Abwärme) von MOSFETs mit höherer Sperrspannung bzw. Spannungsfestigkeit weist der Einsatz von derartigen MOSFETs als Schaltelemente auch den Nachteil auf, dass beispielsweise durchsteckmontierten MOSFETs - d.h. so genannte Through Hole Technology- bzw. THT-MOSFETs - sowie zusätzliche Kühlkörper vorgesehen werden müssen oder bei Verwendung von oberflächenmontierten bzw. Surface-mounted-device-(SMD)-MOSFETs diese z.B. auf einer zusätzlichen Printplattenflächen montiert werden müssen.

Alternativ oder in Kombination mit einem Einsatz von Leistungs-MOSFETs als Schaltelemente kann zur Begrenzung der durch die Streuinduktivitäten des Transformators entstehenden Überspannungen bzw. Spannungsspitzen z.B. für jedes Schaltelement des bidirektionalen Sperrwandlers ein so genanntes Snubber-Netzwerk vorgesehen sein. Das jeweilige Snubber-Netzwerk kann z.B. parallel zum jeweiligen Schaltelement angeordnet sein. Beim Abschalten des jeweiligen Schaltelements wird die überschüssige Energie aus den Streuinduktivitäten des Transformators in das Snubber-Netzwerk geleitet und im Verlauf der Schaltperiode abgebaut, wobei eine gewisse Energiemenge üblicherweise in Wärme umgewandelt wird. Im einfachsten Fall kann beispielsweise ein Kondensator oder eine Zener-Diode als Snubber-Netzwerk verwendet werden. Komplexere Snubber-Netzwerke bestehen z.B. aus Kondensator und Widerstand (RC-Glied) oder aus Kondensator, Widerstand und Diode (RCD-Glied). Der Einsatz eines Snubber-Netzwerks je Schaltelement führt allerdings neben einer komplexen Ausgestaltung der Schaltung zu hohen Energieverlusten und damit zu einem schlechten Wirkungsgrad bzw. einer geringen Effizienz des bidirektionalen Sperrwandlers.

Aus der Schrift KR 101043402 ist beispielsweise ein bidirektionaler Sperrwandler bekannt, bei welchem eine Belastung der Schaltelemente durch Schaltvorgänge, insbesondere beim Abschalten, mittels einer so genannten aktiven Klemmschaltung reduziert wird. Eine derartige Schaltung weist allerdings den Nachteil auf, dass es insbesondere bei Lastsprüngen zu unerwünschten Oszillationen durch einen aus Transformator des bidirektionalen Sperrwandlers und aus Kondensator der aktiven Klemmschaltung gebildeten Schwingkreis kommen kann. Dies führt zu Einschränkungen beim Tastverhältnis des jeweiligen Schaltelements.

Um die Verluste durch die Snubber-Netzwerke der Schaltelemente zu reduzieren bzw. den Wirkungsgrad des bidirektionalen Sperrwandlers zu steigern, kann beispielsweise für jedes verwendete Snubber-Netzwerk ein eigener Tiefsetzsteller, Abwärtswandler bzw. Buck-Konverter vorgesehen werden, um die Streuenergie z.B. auf der Eingangsseite und Ausgangsseite des bidirektionalen Sperrwandlers nutzbar zu machen. Dies weist allerdings den Nachteil auf, dass für jedes Schaltelement mit Snubber-Netzwerk ein Tiefsetzsteller vorgesehen werden muss, wodurch die Schaltung in Aufbau und Realisierung aufwendig, relativ komplex und kostenintensiv wird.

### Darstellung der Erfindung

Der Erfindung liegt daher die Aufgabe zugrunde, eine bidirektionale Sperrwandlerschaltung zu anzugeben, bei welcher auf einfache und kostengünstige Weise durch Streuinduktivitäten bedingte Überspannungen bzw. Spannungsbelastungen an den Schaltelementen begrenzbar sind und ein Wirkungsgrad bzw. eine Effizienz der Schaltung verbessert wird.

Diese Aufgabe wird durch eine bidirektionale Sperrwandlerschaltung der eingangs genannten Art mit den Merkmalen gemäß dem unabhängigen Patentanspruch gelöst. Vorteilhafte Ausführungsformen der vorliegenden Erfindung sind in den abhängigen Ansprüchen beschrieben.

Erfindungsgemäß erfolgt die Lösung der Aufgabe durch eine bidirektionale Sperrwandlerschaltung umfassend einen Transformator mit induktiv gekoppelten Primär- und Sekundärwicklungen, wobei die Primärwicklung mit einem Spannungseingang der bidirektionalen Sperrwandlerschaltung und die Sekundärwicklung mit einem Spannungsausgang der bidirektionalen Sperrwandlerschaltung verbunden sind. Weiterhin weist die bidirektionale Sperrwandlerschaltung ein primärseitiges Schaltelement, welches mit der Primärwicklung in Serie angeordnet ist, und ein sekundärseitiges Schaltelement auf, welche mit der Sekundärwicklung in Serie angeordnet ist. Weiterhin sind ein Ladekondensator sowie ein Tiefsetzsteller vorgesehen. Dabei ist der Ladekondensator durch einen ersten Anschluss mit einem gemeinsamen Potential von Primär- und Sekundärseite der bidirektionalen Sperrwandlerschaltung verbunden. Durch einen zweiten Anschluss ist der Ladekondensator über eine erste Diode mit einem gemeinsamen Potential von Primärwicklung und primärseitigen Schaltelement und über eine zweite Diode mit einem gemeinsamen Potential von Sekundärwicklung und sekundärseitigem Schaltelement verbunden. Mittels des Tiefsetzstellers, welcher entweder eingangsseitig oder ausgangsseitig angeordnet ist, ist eine am Ladekondensator anliegende Spannung auf einen vorgebbaren Wert regelbar.

Der Hauptaspekt der erfindungsgemäß vorgeschlagenen Lösung besteht darin, dass vom Ladekondensator und der ersten wie der zweiten Diode ein Snubber-Netzwerk gebildet wird, welche sowohl für einen Energiefluss vom Spannungseingang zum Spannungsausgang der bidirektionalen Sperrwandlerschaltung als auch für einen Energiefluss vom Spannungsausgang zum Spannungseingang der bidirektionalen Sperrwandlerschaltung zur Begrenzung der Spannungsbelastungen am jeweils schaltenden Schaltelement nutzbar ist. Der eingangs- oder ausgangsseitig angeordnete Tiefsetzsteller kann ebenfalls für beide Energieflussrichtungen der bidirektionalen Sperrwandlerschaltung genutzt werden, um den Ladekondensator zu Entladen bzw. die am Ladekondensator anliegende Spannung auf einem vorgegebenen Wert zu regeln. D.h. es können sowohl das Snubber-Netzwerk bzw. der Ladekondensator als auch der Tiefsetzsteller sowohl für das primärseitige Schaltelement als auch für das sekundärseitige Schaltelement genutzt werden.

Die erfindungsgemäße bidirektionale Sperrwandlerschaltung stellt damit eine kostengünstige und einfache Sperrwandler-Realisierung zur Begrenzung von Spannungsbelastungen bzw. durch Streuinduktivitäten des Transformators bedingte Überspannungen an den Schaltelementen dar. Energieverluste durch diese Begrenzung werden auf einfache Weise durch einen Einsatz des eingangs- oder ausgangsseitig angeordneten Tiefsetzstellers reduziert und damit der Wirkungsgrad der Gesamtschaltung bzw. der bidirektionalen Sperrwandlerschaltung gesteigert. Durch den eingangs- oder ausgangsseitig angeordneten Tiefsetzsteller kann sehr einfach die Streuenergie bei Abschalten eines der beiden Schaltelemente der bidirektionalen Sperrwandlerschaltung beispielsweise durch Zurückspeisen auf der Spannungseingangsseite bzw. auf der Spannungsausgangsseite der bidirektionalen Sperrwandlerschaltung wiederverwendet werden. Weiterhin können kostengünstige Schaltelemente mit geringerer Sperrspannung verwendet werden und aufwendige Kühlmaßnahmen entfallen.

Eine zweckmäßige Weiterbildung der Erfindung sieht vor, dass der vorgebbare Wert für die am Ladekondensator anliegende Spannung in einem vorgegebenen Verhältnis zum jeweils größeren Spannungswert aus maximaler Eingangsspannung und maximaler Ausgangsspannung der bidirektionalen Sperrwandlerschaltung festlegbar ist. D.h. der vorgebbare Wert der am Ladekondensator anliegenden Spannung wird beispielsweise in einem vorgegebenen Verhältnis zur maximalen Eingangsspannung der bidirektionalen Sperrwandlerschaltung festgelegt, wenn diese größer als die maximale Ausgangsspannung der bidirektionalen Sperrwandlerschaltung ist. Bei einer maximalen Ausgangsspannung, welche größer ist als die maximale Eingangsspannung der bidirektionalen Sperrwandlerschaltung, wird idealerweise diese zum Bestimmen des vorgebbaren Werts der am Ladekondensator anliegenden Spannung herangezogen.

Idealerweise weist der vorgebbaren Wert der am Ladekondensator anliegenden Spannung zumindest einen zweifachen Wert des jeweils größeren Spannungswertes aus maximaler Eingangs- und maximaler Ausgangsspannung der bidirektionalen Sperrwandlerschaltung auf. Dadurch werden idealerweise betriebsmäßig notwendige Spannungsüberhöhungen am Schaltelement nicht verhindert, welche aufgrund der Kopplung durch den Transformator entstehen.

Es ist weiterhin vorteilhaft, wenn das primärseitige Schaltelement wie das sekundärseitige Schaltelement als Metall-Oxid-Halbleiter-Feldeffekttransistoren bzw. MOS-FETs ausgeführt sind. Idealerweise können MOS-FETs mit einem geringen Einschaltwiderstand eingesetzt werden (z.B. MOS-FETs mit einer Drainspannung unter 200V). Eine Dimensionierung der eingesetzten Schaltelemente bzw. MOS-FETs wird beispielsweise aus der Dimensionierung des Ladekondensators und des eingangs- oder ausgangsseitigen Tiefsetzstellers abgeleitet, wobei die Dimensionierung des Ladekondensators und des Tiefsetzstellers von jeweils größeren Spannungswert aus maximaler Eingangsspannung und maximaler Ausgangsspannung der bidirektionalen Sperrwandlerschaltung abhängt.

Eine zweckmäßige Ausgestaltung der erfindungsgemäßen Sperrwandlerschaltung sieht vor, dass der eingangsseitig oder ausgangseitig angeordnete Tiefsetzsteller zumindest eine Induktivität, eine dritte Diode sowie ein Schaltelement umfasst. Der eingangs- oder ausgangsseitig angeordnete Tiefsetzsteller weist in vorteilhafter Weise eine Wirkung als Regler (z.B. Zweipunktregler, Proportional-Regler, Intgral-Regler, Differential-Regler oder einer Kombination dieser Regler) auf, durch welchen die am Ladekondensator anliegende Spannung auf einem vorgebbaren Wert geregelt wird. Solange die am Ladekondensator anliegende Spannung den vorgebbaren Wert noch nicht erreicht hat (z.B. beim anfänglichen Abschalten eines der beiden Schaltelemente der bidirektionalen Sperrwandlerschaltung), ist das Schaltelement des Tiefsetzstellers ausgeschaltet bzw. nicht getaktet. Erst wenn von der am Ladekondensator anliegenden Spannung der vorgebbare Wert erreicht oder überschritten wird, wird das Schaltelement des Tiefsetzstellers solange getaktet, bis von der am Ladekondensator anliegenden Spannung der vorgebbare Wert wieder unterschritten oder erreicht ist. Dabei wird beispielsweise die im Ladekondensator gespeicherte Streuenergie - je nach Anordnung des Tiefsetzstellers - an den Spannungseingang oder an den Spannungsausgang der bidirektionalen Sperrwandlerschaltung zurückgespeist und kann dort entsprechend genutzt werden.

Das Schaltelement des Tiefsetzstellers kann dabei idealerweise als Metall-Oxid-Halbleiter-Feldeffekttransistor bzw. MOS-FET oder als Bipolartransistor oder als integrierter Baustein ausgeführt sein und mittels einer entsprechenden Ansteuerung angesteuert werden. Ein MOS-FET gehört zu den Feldeffekttransistoren mit isoliertem Gate, bei welchem die Ansteuerung über eine Steuerspannung (Gate-Source-Spannung) erfolgt. Bei Verwendung eines MOS-FETs als Schaltelement des Tiefsetzstellers kann entweder ein so genannter N-Kanal-MOS-FET (Anreicherungstyp) oder ein so genannter P-Kanal-MOS-FET (Verarmungstyp) zum Einsatz kommen. Der Einsatz eines MOS-FETs stellt eine einfache und kostengünstige Realisierung des Schaltelements des Tiefsetzstellers dar, wobei MOS-FET eine relativ hohe Schaltgeschwindigkeit aufweisen können.

Alternative kann für das Schaltelement des Tiefsetzstellers ein Bipolartransistor eingesetzt werden. Ein Bipolartransistor ist ein Transistortyp, bei welchem beide Ladungsträgertypen (d.h. negativ geladene Elektronen und positiv geladene Defektelektronen) zum Stromtransport durch den Transistor beitragen. Die Ansteuerung des Bipolartransistors erfolgt mittels eines elektrischen Stroms. Als Schaltelement im Tiefsetzsteller kann entweder ein so genannter NPN-Transistor oder ein so genannter PNP-Transistor zum Einsatz kommen, wobei NPN bzw. PNP die Reihenfolge und einen Dotierungstyp der Schichtung des jeweiligen Transistors angeben.

Alternativ kann es auch vorteilhaft sein, wenn das Schaltelement des Tiefsetzstellers mittels eines integrierten Bauelements realisiert wird. Dabei können im integrierten Bauelement eine Regelung, eine Treiber- und eine Schaltelementfunktionalität integriert sein und es muss keine zusätzliche Ansteuerung realisiert werden, wie bei Verwendung eines MOSFETs oder Bipolartransistors als Schaltelement im Tiefsetzsteller.

Es ist günstig, wenn primärseitiges wie sekundärseitiges Schaltelement des bidirektionalen Sperrwandlers sowie das Schaltelement des Tiefsetzstellers als Gallium-Nitrid-basierte Halbleiterschalter ausgeführt sind. Halbleiterschalter auf Gallium-Nitrid-Basis erlauben insbesondere höhere Schaltfrequenzen und können bei einem Einsatz in einem Schaltnetzteil wie z.B. einem Sperrwandler einen höheren bzw. besseren Wirkungsgrad erzielen als z.B. üblicherweise eingesetzte Schaltelemente auf Siliciumbasis.

Eine zweckmäßige Ausführungsform des bidirektionalen Sperrwandlers sieht vor, dass eine Überschussenergie, welche am eingangsseitig oder ausgangseitig angeordneten Tiefsetzsteller abfällt, in eine andere Spannung als eine Eingangsspannung oder Ausgangsspannung der Sperrwandler einspeisbar ist. D.h. die Überschussenergie, welche am eingangs- oder ausgangsseitigen Tiefsetzsteller durch eine Regelung der am Ladekondensator anliegenden Spannung auf den vorgebbaren Wert abfällt, wird idealerweise nicht dazu genutzt, um z.B. die Eingangs- oder Ausgangsspannung des Sperrwandlers zu reduzieren, sondern um beispielsweise eine gegen das gemeinsame Potential von Primär- und Sekundärseite (z.B. Massepotential) aufgebaute Hilfsversorgung zu speisen. Diese Hilfsversorgung kann dann z.B. zur Spannungsversorgung von einer Ansteuerelektronik, Anzeigen, etc. genutzt werden.

### Kurzbeschreibung der Zeichnung

Die Erfindung wird nachfolgend in beispielhafter Weise anhand der beigefügten Figuren erläutert. Es zeigen dabei:
Figur 1 eine schematische und beispielhafte Ausführungsform der erfindungsgemäßen, bidirektionalen Sperrwandlerschaltung
Figur 2 schematisch und beispielhaft eine alternative Ausführungsform der erfindungsgemäßen, bidirektionalen Sperrwandlerschaltung

### Ausführung der Erfindung

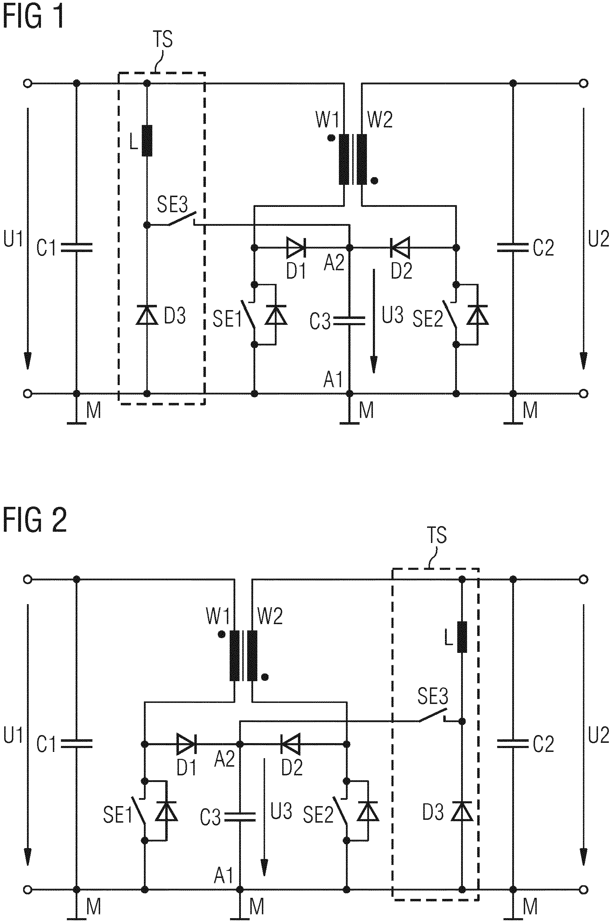

Figur 1 zeigt schematisch und beispielhaft eine Ausführungsform der erfindungsgemäßen, bidirektionalen Sperrwandlerschaltung. Die bidirektionale Sperrwandlerschaltung weist einen Transformator mit einer Primärwicklung W1 und Sekundärwicklung W2 auf, welche induktiv gekoppelt sowie gegengleich gewickelt sind. Die Primärwicklung W1 ist dabei in Reihe mit einem primärseitigem Schaltelement SE1 an einen Spannungseingang mit einer Eingangsspannung U1 angeschaltet, wobei die Eingangsspannung U1 beispielsweise in einem Bereich von 30 bis 60 Volt liegen kann. Die Sekundärwicklung W2 ist in Reihe mit einem sekundärseitigem Schaltelement SE2 angeordnet und mit einem Spannungsausgang mit einer Ausgangsspannung U2. Für das primärseitige Schaltelement SE1 und das sekundärseitige Schaltelement SE2 werden beispielsweise MOS-FETs verwendet. Weiterhin weisen Primärseite und Sekundärseite bzw. Spannungseingang und Spannungsausgang ein gemeinsames Potential M wie z.B. Massepotential auf.

Eine Richtung des Energie- bzw. Leistungsflusses in der bidirektionalen Sperrwandlerschaltung wird durch das jeweils schaltende Schaltelement SE1, SE2 vorgegeben. Das jeweils nicht schaltende Schaltelement SE1, SE2 arbeitet dann als Diode. D.h. wird beispielsweise das primärseitige Schaltelement SE1 geschaltet, so wird vom bidirektionalen Sperrwandler Energie bzw. Leistung vom Spannungseingang zum Spannungsausgang übertragen. Das sekundärseitige Schaltelement SE2 arbeitet als Diode. Ein dem Spannungsausgang parallel geschalteter Ausgangskondensator C2 dient beispielsweise zum Glätten der übertragenen Energie bzw. Leistung. Wird hingegen z.B. das sekundärseitige Schaltelement SE2 geschaltet, wird Energie bzw. Leistung vom Spannungsausgang zum Spannungseingang der bidirektionalen Sperrwandlerschaltung übertragen und das primärseitige Schaltelement SE1 arbeitet als Diode. Am Spannungseingang kann ein Eingangskondensator C1 vorgesehen sein, um die vom Spannungsausgang her übertragene Energie bzw. Leistung zu glätten.

Weiterhin ist bei der erfindungsgemäßen, bidirektionalen Sperrwandlerschaltung ein Ladekondensator C3 vorgesehen. Der Ladekondensator C3 ist mittels eines ersten Anschlusses A1 mit dem gemeinsamen Potential M von Primärseite und Sekundärseite bzw. Spannungseingang und Spannungsausgang verbunden. Durch einen zweiten Anschluss A2 ist der Ladekondensator C3 über eine erste Diode D1 mit einem gemeinsamen Potential von primärseitigem Schaltelement SE1 und Primärwicklung und über eine zweite Diode D2 mit einem gemeinsamen Potential von sekundärseitigem Schaltelement SE2 und Sekundärwicklung verbunden.

Weiterhin ist eingangsseitig ein Tiefsetzsteller TS vorgesehen. Der Tiefsetzsteller TS umfasst zumindest eine Induktivität L, eine dritte Diode D3 und ein Schaltelement SE3. Über das Schaltelement SE3 ist der Tiefsetzsteller TS mit dem zweiten Anschluss A2 des Ladekondensators C3 bzw. mit einer am Ladekondensator C3 anliegenden Spannung U3 verbunden. Das Schaltelement SE3 des Tiefsetzsteller TS kann beispielsweise als MOS-FET (z.B. N-Kanal- oder P-Kanal-MOS-FET) oder als Bipolartransistor (z.B. NPN- oder PNP-Transistor) ausgeführt sein, wobei eine entsprechende Ansteuerung für den jeweils verwendeten Schaltelementtyp bzw. Transistortyp vorzusehen ist. Alternativ kann auch ein integriertes Bauelement als Schaltelement SE3 des Tiefsetzstellers TS verwendet werden, welche bereits eine entsprechende Regelung sowie entsprechende Treiber- und Schaltelementfunktionalität umfasst.

Über den Tiefsetzsteller TS ist die am Ladekondensator C3 anliegende Spannung U3 auf einen vorgebbaren Wert regelbar. Dieser vorgebbare Wert ist in einem vorgegebenen Verhältnis zum jeweils größeren Spannungswert aus einer maximalen Eingangsspannung U1 und einer maximalen Ausgangsspannung U2 der bidirektionalen Sperrwandlerschaltung einstellbar. Der vorgebbare Wert für die am Ladekondensator C3 anliegende Spannung U3 kann dabei auf zumindest einen zweifachen Wert des jeweils größeren Spannungswertes aus maximaler Eingangsspannung U1 und maximaler Ausgangsspannung U2 der bidirektionalen Sperrwandlerschaltung eingestellt werden.

Bei einem Energie- bzw. Leistungsfluss von der Primär- auf die Sekundärseite - d.h. bei schaltenden, primärseitigem Schaltelement SE1 - wird beim Abschalten des primärseitigen Schaltelement SE1 eine in einer Streuinduktivität des Transformators gespeicherte Energie über die erste Diode D1 in den Ladekondensator C3 geladen. Dabei wird nach einigen Taktzyklen der Ladekondensator C3 auf den vorgebbaren Wert der am Ladekondensator C3 anliegenden Spannung U3 aufgeladen. Ist dieser vorgebbare Wert der Spannung U3 erreicht bzw. überschritten, so beginnt das Schaltelement SE3 des eingangsseitig angeordneten Tiefsetzstellers TS zu schalten. Die im Ladekondensator C3 gespeicherte Energie wird dadurch über den eingangsseitig angeordneten Tiefsetzsteller TS in einen Zwischenkreis bzw. zum Spannungseingang der bidirektionalen Sperrwandlerschaltung zurückgespeist. Dort kann diese Energie genutzt werden um z.B. die von der Eingangsspannung U1 gelieferte Eingangsleistung des bidirektionalen Sperrwandlers zur reduzieren oder um z.B. eine gegen das gemeinsame Potential M von Primär- und Sekundärseite aufgebaute Hilfsversorgung zu speisen. Das Schaltelement SE3 wird solange geschaltet, bis der vorgebbare Wert der am Ladekondensator C3 anliegenden Spannung nicht mehr erreicht bzw. nicht mehr überschritten wird. D.h. der Tiefsetzsteller TS arbeitet als Regler (z.B. Proportional-Regler), um die am Ladekondensator C3 anliegende Spannung auf dem vorgebbaren Wert zu halten.

Bei einem Energie- bzw. Leistungsfluss von der Sekundärseite zur Primärseite der bidirektionalen Sperrwandlerschaltung - d.h. bei schaltendem, sekundärseitigen Schaltelement SE2 - wird beim Abschalten des sekundärseitigen Schaltelements SE2 die in der Streuinduktivität des Transformators gespeicherte Energie über die zweite Diode D2 in den Ladekondensator C3 geladen. Erreicht oder überschreitet die am Ladekondensator C3 anliegende Spannung U3 nach einigen Taktzyklen den vorgebbaren Wert, so beginnt wieder das Schaltelement SE3 des eingangsseitig angeordneten Tiefsetzstellers TS zu schalten, bis der vorgebbare Wert der am Ladekondensator C3 anliegenden Spannung nicht mehr erreicht bzw. nicht mehr überschritten wird. Die gespeicherte Energie wird auch in diesem Fall über den eingangsseitig angeordneten Tiefsetzsteller TS, der wieder als Regler (z.B. als Proportional-Regler) arbeitet und die Spannung am Ladekondensator C3 auf den vorgebbaren Wert regelt, in den Zwischenkreis bzw. zum Spannungseingang z.B. für einen weiter Nutzung zurückgespeist.

Alternativ kann der Tiefsetzsteller TS auch ausgangsseitig bei der bidirektionalen Sperrwandlerschaltung angeordnet sein. Eine derartige Ausführungsform der erfindungsgemäßen Sperrwandlerschaltung ist schematisch und beispielhaft in Figur 2 dargestellt. Die bidirektionale Sperrwandlerschaltung gemäß Figur 2 entspricht dabei weitgehend der in Figur 1 dargestellten Sperrwandlerschaltung, weist allerdings den Tiefsetzsteller TS ausgangsseitig angeordnet auf. Der Tiefsetzsteller TS umfasst dabei ebenfalls zumindest die Induktivität L, die dritte Diode D3 und ein Schaltelement SE3, über welches eine Anbindung zum zweiten Anschluss A2 des Ladekondensators C3 bzw. zur am Ladekondensator C3 anliegenden Spannung U3 besteht. Beim Abschalten des jeweils schaltenden Schaltelements SE1, SE2 der bidirektionalen Sperrwandlerschaltung wird wieder die in der Streuinduktivität des Transformators gespeicherte Energie entweder über die erste oder die zweite Diode D1, D2 in den Ladekondensator C3 geladen, bis die am Ladekondensator C3 anliegende Spannung U3 den vorgebbaren Wert erreicht bzw. überschritten hat. Dann wird vom Schaltelement SE3 des ausgangsseitig angeordneten Tiefsetzsteller TS begonnen zu schalten, bis der vorgebbare Wert der am Ladekondensator C3 anliegenden Spannung nicht mehr erreicht bzw. nicht mehr überschritten wird. Bei einer ausgangsseitigen Anordnung des Tiefsetzstellers TS wird die in der Streuinduktivität gespeicherte Energie über den Tiefsetzsteller TS allerdings in den Zwischenkreis in Richtung Spannungsausgang bzw. zum Spannungsausgang zurückgespeist, um dort genutzt zu werden (z.B. für eine Hilfsversorgung, etc.).

## Patentansprüche

1. Bidirektionale Sperrwandlerschaltung umfassend einen Transformator mit induktiv gekoppelten Primär- und Sekundärwicklungen (W1, W2), wobei die Primärwicklung (W1) mit einem Spannungseingang der Sperrwandlerschaltung verbunden ist und die Sekundärwicklung (W2) mit einem Spannungsausgang der Sperrwandlerschaltung verbunden ist, mit einem primärseitigen Schaltelement (SE1), welches in Reihe mit der Primärwicklung (W1) angeordnet ist, und mit einem sekundärseitigen Schaltelement (SE2), welches in Reihe mit der Sekundärwicklung (W2) angeordnet ist, ***dadurch gekennzeichnet, dass*** ein Ladekondensator (C3) vorgesehen ist, welcher mittels eines ersten Anschlusses (A1) mit einem gemeinsamen Potential (M) von Primär- und Sekundärseite verbunden ist, und welcher mittels eines zweiten Anschlusses (A2) über eine erste Diode (D1) mit einem gemeinsamen Potential von primärseitigem Schaltelement (SE1) und Primärwicklung (W1) und über eine zweite Diode (D2) mit einem gemeinsamen Potential von sekundärseitigem Schaltelement (SE2) und Sekundärwicklung (W2) verbunden ist, und dass mittels eines eingangsseitig oder ausgangseitig angeordneten Tiefsetzstellers (TS) eine am Ladekondensator (C3) anliegende Spannung (U3) auf einen vorgebbaren Wert regelbar ist.

2. Bidirektionale Sperrwandlerschaltung nach Anspruch 1, ***dadurch gekennzeichnet, dass*** der vorgebbare Wert für die am Ladekondensator (C3) anliegende Spannung (U3) in einem vorgegebenen Verhältnis zum jeweils größeren Spannungswert aus einer maximalen Eingangsspannung (U1) und einer maximalen Ausgangsspannung (U2) der Sperrwandlerschaltung festlegbar ist.

3. Bidirektionale Sperrwandlerschaltung nach Anspruch 2, ***dadurch gekennzeichnet, dass*** der vorgebbare Wert für die am Ladekondensator (C3) anliegende Spannung (U3) zumindest einen zweifachen Wert des jeweils größeren Spannungswertes aus maximaler Eingangsspannung (U1) und maximaler Ausgangsspannung (U2) der Sperrwandlerschaltung aufweist.

4. Bidirektionale Sperrwandlerschaltung nach einem der vorhergehenden Ansprüche, ***dadurch gekennzeichnet, dass*** das primärseitige Schaltelement (SE1) wie das sekundärseitige Schaltelement (SE2) als Metall-Oxid-Halbleiter-Feldeffekttransistoren oder MOS-FETs ausgeführt sind.

5. Bidirektionale Sperrwandlerschaltung nach einem der vorhergehenden Ansprüche, ***dadurch gekennzeichnet, dass*** der eingangsseitig oder ausgangseitig angeordnete Tiefsetzsteller (TS) zumindest eine Induktivität (L), eine dritte Diode (D3) sowie ein Schaltelement (SE3) umfasst.

6. Bidirektionale Sperrwandlerschaltung nach Anspruch 5, ***dadurch gekennzeichnet, dass*** das Schaltelement (SE3) des Tiefsetzstellers (TS) als Metall-Oxid-Halbleiter-Feldeffekttransistor oder MOS-FET ausgeführt ist.

7. Bidirektionale Sperrwandlerschaltung nach Anspruch 5, ***dadurch gekennzeichnet, dass*** das Schaltelement (SE3) des Tiefsetzstellers (TS) als Bipolartransistor ausgeführt ist.

8. Bidirektionale Sperrwandlerschaltung nach Anspruch 5, ***dadurch gekennzeichnet, dass*** das Schaltelement (SE3) des Tiefsetzstellers (TS) als integriertes Bauelement ausgeführt ist, welcher eine Regelung, eine Treiber- und eine Schaltelementfunktionalität umfasst.

9. Bidirektionale Sperrwandlerschaltung nach Anspruch 5, ***dadurch gekennzeichnet, dass*** primärseitiges wie sekundärseitiges Schaltelement (SE1, SE2) sowie das Schaltelement (SE3) des Tiefsetzstellers als Gallium-Nitrid-basierte Halbleiterschalter ausgeführt sind.

10. Bidirektionale Sperrwandlerschaltung nach einem der vorhergehenden Ansprüche, ***dadurch gekennzeichnet, dass*** eine Überschussenergie, welche am eingangsseitig oder ausgangseitig angeordneten Tiefsetzsteller abfällt, in eine andere Spannung als eine Eingangsspannung (U1) oder Ausgangsspannung (U2) der Sperrwandler einspeisbar ist.
